# EUROPEAN PATENT SPECIFICATION

(11) **EP 2 035 349 B1**
(45) Date of publication and mention of the grant of the patent: **01.12.2010**
(21) Application number: 07748020.0
(22) Date of filing: 17.04.2007
(51) Int. Cl.: C04B 40/00, C04B 28/02

(54) **A METHOD FOR PROCESSING MORTAR AND A MORTAR ADDITIVE COMPOSITION**
VERFAHREN ZUR VERARBEITUNG VON MÖRTEL UND MÖRTELZUSATZZUSAMMENSETZUNG
PROCÉDÉ DE TRAITEMENT DU MORTIER ET COMPOSITION ADJUVANTE POUR MORTIER

(30) Priority: 22.02.2007 SE 0700447
(43) Date of publication of application: 18.03.2009
(73) Proprietor: Saint-Gobain Byggprodukter AB, 191 24 Sollentuna (SE)
(72) Inventor: MAIER, Wolfram, 79194 Gundelfingen (DE); BECKER, Matthias, 79379 Mülheim (DE); SELINGER, Hubert, 79291 Merdingen (DE)
(74) Representative: Goldenberg, Virginie Isabelle
(86) International application number: PCT/SE2007/000355
(87) International publication number: WO 2008/091184

(56) References cited:
- EP-A- 0 541 493
- EP-A- 1 710 064
- GB-A- 2 194 528
- US-A- 4 954 544
- US-B1- 6 531 528

## Description

### TECHNICAL FIELD OF THE INVENTION

The present invention relates to a method for processing mortar, comprising the steps of mixing a dry mortar mix with water, a substance influencing the solidification rate of the mortar and a marker for producing a perceptible difference between marked and unmarked fresh mortar, and thereby marking the fresh mortar containing said substance. This type of processes is used together with a substance such as a retarder composition for delaying solidification of a mortar based on mineral binders, such as cement, lime gypsum or combinations thereof. Such retarder compositions are used as solidification timers or for delaying solidification of said mortars to keep the mortar fresh or soft, so that any mortar processing equipment can be left for a period of time, such as overnight or over a weekend, and then used again without problems with solidified mortar inside the equipment. Such equipment usually include a hose, a mixing pump and a spraying nozzle or similar. Said marker is used to mark the mortar containing said substance, such as the retarder, to indicate the presence of such substance.

The present invention further relates to the use of a substance for marking mortar containing a substance influencing the solidification rate of the mortar, such as the retarder. The present invention further relates to a mortar additive composition and a mortar comprising said mortar additive composition.

### STATE OF THE ART

It is widely known that retarders can be used to prevent solidification of mortar left inside mortar processing equipment, such as hoses, pumps, spraying nozzles, etc. When using such retarders a color marking is used in combination with the retarder so that a user or craftsman can see when the equipment is full with mortar containing retarder. This is e.g. disclosed in EP1710064, which is hereby incorporated by reference, particularly the matter disclosed therein concerning the use of retarders in mortars and the use of color markers for tinting the mortar containing the retarder. EP1710064 also dislcoses a device comprising a by-pass conduit, so that the device easily can be switched between ordinary basic mortar and mortar containing the retarder solution with the color marker.

Hence, EP1710064 discloses a colorised retarder solution for a cementitious adhesive mortar. In the evening, before stop of spraying, this colorised retarder solution is added into the mixing pump. As soon as tinted mortar is coming out of the hose, the mixing pump can be switched off and the retarded, colorised mortar can be left in the hoses overnight without solidifying.

One problem with such prior art devices and methods is that the mortar can not be used as a final render or as a coating due to that the mortar containing the retarder is colored. Consequently, this will result in wasted mortar or stains on the surface on which the mortar is applied.

One drawback with such prior art methods and devices is that the colored mortar when applied onto a surface might bleed through outer layers or coatings of mortars or renders. Hence, such prior art methods can only be used for adhesive mortars applied behind boards, but not for mortars on top of boards, because there is a risk that the water soluble dye will bleed through the final coat renders and cause stains.

One further problem with such prior art devices and methods is that quite a lot of mortar will be tinted every evening, which might become waste. The amount of mortar that is tinted depends on the equipment used but can amount to 70 litres or even more.

### SUMMARY OF THE INVENTION

One object of the present invention is to eliminate the above-mentioned drawbacks and problems with prior art. The present invention provides a more efficient marking of mortar containing a substance influencing the solidification rate of the mortar, such as a retarder for delaying solidification of the mortar, or an accelerator for neutralizing the effect of the retarder or for increasing the solidification rate of the mortar. The present invention results in that a person can determine when the mortar contains the retarder or the accelerator and thus knows when the equipment is full of mortar containing retarder and/or when the effect of the retarder is neutralized by the accelerator. Simultaneously, the invention eliminates the problem with stains and thus can be used on top of boards, as a final render or coating etc.

The invention relates to a method for processing mortar, comprising the steps of mixing a dry mortar mix with water, a substance influencing the solidification rate of the mortar and a marker for producing a perceptible difference between marked and unmarked fresh mortar, and thereby marking the fresh mortar containing said substance, characterised by the steps of maintaining the perceptible difference temporarily, bringing the perceptible difference to fade, and at least substantially removing the perceptible difference between marked an unmarked mortar. The method may further comprise the steps of tinting the fresh mortar containing the substance influencing the solidification rate thereof to produce the perceptible difference between marked and unmarked fresh mortar, wherein the fresh mortar is provided with a color marking so that it is distinguishable from the unmarked and fresh mortar having its original and natural color.

The marker can for example be a pH indicator, such as phenolphthalein, for tinting the fresh mortar during a period when it has a relatively high pH value and then bring the tinted mortar to fade so that the color at least substantially disappears as the pH value is reduced. Then, the fact that the pH of mortar is reduced or decreases while the mortar solidifies or carbonates is used in combination with a pH indicator to obtain the desired effect. The color marker or dye used can be water-soluble. Of course, it is well known that pH indicators change their colors depending on the pH values. As an example, phenolphthalein is red approximately at pH > 9 and it is colorless approximately at pH < 9. When using a solution of a pH indicator such as phenolphthalein the mortar will be tinted red as soon as the phenolphthalein solution comes into contact with the cementitious fresh mortar. After application, the mortar will start recarbonating at its surface. During this recarbonation, the pH will decrease down to below pH 9, resulting in a change of the phenolphthalein color from red to colourless. At the visible surface of the mortar, this fading or decolorisation usually takes place within less than one day.

Alternatively, an unstable organic dye, such as a carotinoid or a xanthophyll, can be used to mark or tint the mortar temporarily, wherein the marked mortar will fade in time due to degradation of the dye.

By temporarily marking or tinting the mortar comprising the substance influencing the solidification rate of the mortar, the marked mortar can be used as ordinary unmarked mortar as the perceptible or visible marking will disappear or at least substantially disappear. Consequently, the marked mortar is not wasted. Further, the temporarily marked mortar can be used in any layer, as the problem of bleeding has been eliminated, and also as a top coating or a final render as the perceptible difference or the difference which can be detected by the human eye between marked and unmarked mortar will disappear.

During the day, the mortar applicators will spray ordinary standard recipes of mortars, such as cementitious mortars. In the evening, shortly before stop of spraying, the retarder and the marker, such as a retarding and temporarily tinting composition or solution, are added into the mixer. As soon as colored fresh mortar is coming out of the hoses, they can switch off the mixing pump without emptying and cleaning the hoses. Next morning, they just switch on the machine again, and continue spraying (without adding the special retarding and tinting solution). The red colored fresh mortar (up to 70 liters in the mixer and the hoses) is not waste, but can be used as ordinary mortar, because it will lose its color during recarbonation (within approx. 1 day).

The present invention also relates to the use of a substance, which provides a temporary marking of mortar, in combination with mortar and a substance influencing the solidification rate of the mortar, for marking the mortar containing the substance influencing the solidification rate in the mortar. As above, the substance which provides a temporary marking of mortar can be a pH indicator, such as phenolphthalein, or a dye which degrades and fades in time or due to external conditions. The substance influencing the solidification rate of the mortar can be a retarder or an accelerator as above.

The present invention also relates to a mortar additive composition for influencing the solidification rate of mortar, comprising a substance influencing the solidification rate of the mortar and a marker for producing a perceptible difference between marked and unmarked fresh mortar to mark the fresh mortar containing the substance influencing the solidification rate in the mortar, characterised in that the marker is a substance which maintains the perceptible difference temporarily and then fades to remove the perceptible difference between marked and unmarked mortar. As above, the marker can be a substance providing a visible difference, such as a color marking, and can be marking only fresh mortar, such as a pH indicator.

The present invention also relates to a mortar, such as a mortar based on one or more mineral binders, comprising said mortar additive composition. The mineral binders are for example cement, lime, gypsum or combinations thereof. The mortar can comprise dispersion powder and/or cellulose ether, which reduces the time for the pH indicator marker to fade and for removing the perceptible difference.

Hence, according to one aspect the invention relates to a mortar additive composition in the form of a retarder composition or solution for delaying solidification or carbonation of mortar or similar building materials, so that the mortar can be left in mortar handling equipment for a period of time without hardening. The retarder composition comprises a marker for tinting the fresh, unsolidified or uncarbonated mortar, so that a user can see when the equipment is full with retarded mortar. As mentioned above, the marker is a substance which for example is colored when the mortar is wet, fresh, unsolidified or uncarbonated, and is colorless, or at least does not cause a significant difference between treated mortar and untreated mortar, when the mortar is dry, hardened, solidified or carbonated. Hence, the mortar is not colored permanently but only temporarily as long as the mortar not is solidified. Consequently, even if the marker used should bleed no stains will appear as the marker then is transparent and colorless. Hence, the tinted fresh mortar will regain its original color automatically during hardening of the mortar, wherein the mortar is subject to temporary tinting so that only the fresh mortar is tinted or colored. By this, there is no limitation for only a "behind boards"-application.

The mortar additive composition or retarder mixture can be in the form of a solution, e.g. including water, retarder and the marker, or a composition including retarder and the marker which composition can be added to water. The solution is used instead of water when mixing the mortar in a conventional manner.

The retarding and temporary tinting solution described above can be used for retarding all kinds of mortars based on mineral binders, such as standard cementitious mortars, so that they can be left in the hoses during the night (without emptying and cleaning the machine and hoses). Because of the temporary tinting effect, this invention is not limited to mortars applied behind boards like with prior art systems.

Further characteristics and advantages of the present invention will become apparent from the description of the embodiments below, the appended drawings and the dependent claims.

### BRIEF DESCRIPTION OF THE DRAWINGS

The invention will now be described in more detail by means of embodiment examples and with reference to the enclosed drawings, on which:
Fig. 1A is a schematic diagram, showing a device for mixing and spraying mortar according to one embodiment of the invention, wherein the addition of a retarder comprising a marker for temporarily marking the mortar has been switched off,
Fig. 1B is a schematic diagram, showing the device for mixing and spraying mortar according to Fig. 1, wherein the addition of the retarder comprising the marker for temporarily marking the mortar has been switched on,
Fig. 2A is a schematic diagram, showing a device for mixing and spraying mortar with a retarder according to one embodiment of the invention, wherein the addition of an accelerator comprising the marker for temporarily marking the mortar has been switched on,
Fig. 2B is a schematic diagram, showing a device for mixing and spraying mortar with a retarder according to Fig. 2A, wherein the addition of the accelerator comprising the marker for temporarily marking the mortar has been switched off,
Fig. 3 is a diagram showing the color change over time for a simple test mortar,
Fig. 4 is a diagram showing the color change over time for a retarded simple test mortar and an unretarded simple test mortar,
Fig. 5 is a diagram showing the impact of cellulose ether and dispersion powder, respectively, on the color change over time, and
Fig. 6 is a diagram showing the change of color for a marked mortar compared to an unmarked mortar.

### THE INVENTION

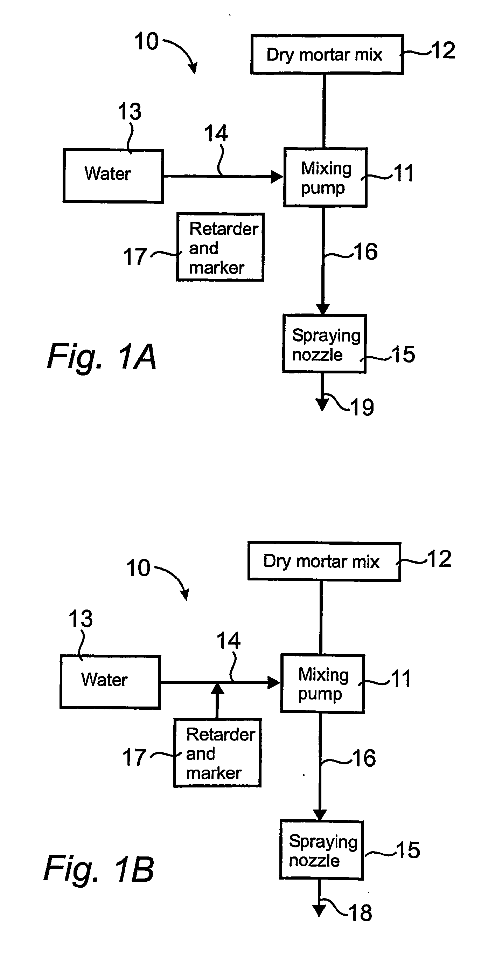

With reference to Fig. 1A and Fig 1B a mortar processing equipment or a device 10 for mixing and spraying mortar according to one embodiment of the invention is schematically illustrated. For example, the device 10 is a conventional device for mixing and spraying mortars based on mineral binders, such as cement, lime, gypsum or combinations thereof. The device 10 comprises a mixing device, such as a conventional mixing pump 11 or similar, connected to a dry mortar mix source 12 and a water source 13, so that dry mortar mix and water can be fed to the mixing pump 11 and mixed in said mixing pump 11 to produce mortar. The water source 13 is connected to the mixing pump 11 through a conduit 14 or similar.

The mixing pump 11 is further connected to a spraying device such as a spraying nozzle 15 for spraying mortar onto a surface, such as a wall. The mixing pump 11 is connected to the spraying nozzle 15 through a hose 16 or similar for feeding the fresh mortar produced in the mixing pump 11 to the spraying nozzle 11. Alternatively, the mixer described in EP0925892 can be used.

Further, a sorce for a substance influencing the solidification rate of the mortar, such as a retarder source 17, is connectable to the mixing pump 11 through the conduit 14, so that a substance influencing the solidification rate of the mortar, such as a retarder for delaying solidification of the mortar, can be introduced into the mixing pump 11 and the mortar. Hence, water is introduced into the mixing pump 11 together with a retarder composition or solution. In Fig. 1A the retarder source 17 is disconnected from the conduit 14 and in Fig. 1B the retarder source 17 is connected to the conduit 14. Alternatively, the retarder source 17 is connectable to the mixing pump 11 directly.

According to the embodiment of Fig. 1A ordinary mortar, i.e. mortar without any retarder, is produced and sprayed onto a surface in a conventional manner. When there is a planned interruption or pause in the mortar spraying process, such as during the night or over a weekend, the retarder source 17 is connected to the conduit 14 so that the retarder is added to the mortar. This is illustrated in Fig. 1B. By means of the retarder, mortar present in the mortar processing equipment, such as in the mixing pump 11, the hose 16 and the spraying nozzle 15, can be left for a period of time without solidifying inside the equipment. After the interruption, the retarder source 17 is disconnected or switched off, as illustrated in Fig. 1A, wherein the mortar containing the retarder present in the equipment is sprayed followed by ordinary mortar containing no retarder.

According to this embodiment of the invention, a marker for marking the mortar containing the retarder is added. The marker is for example mixed with the retarder forming a mortar additive composition which is provided from the retarder source 17 to the conduit, wherein water, retarder and the marker is fed into the mixing pump to produce marked mortar containing the retarder. As the mortar containing the retarder is marked, the person or craftsman handling the device 10 and spraying the mortar knows when the mortar contains the retarder. Consequently, he can determine when the equipment, such as the mixing pump 11, the hose 16 and the spraying nozzle 15, is full of mortar containing the retarder as marked mortar 18 is sprayed instead of unmarked mortar 19.

The marker is chosen for producing a perceptible difference between marked and unmarked fresh mortar, and thereby marking the fresh mortar containing the retarder so that a person can distinguish marked mortar from unmarked mortar. Preferably, the marker produces a visible difference between marked and unmarked mortar, so that a person can see the difference between marked and unmarked mortar. For example, the marker is tinting the mortar containing the retarder, to produce a difference in color. The marker is a temporary marker for temporarily marking the mortar, so that the perceptible difference fades and at least substantially disappears. For example the marker is a marker marking only fresh mortar, wherein there is a perceptible difference between fresh mortar containing the marker and fresh mortar not containing the marker, which perceptible difference fades and disappears as the mortar solidifies. For example the marker is a pH indicator showing a color above a certain pH value to produce the perceptible difference, which color fades and at least substantially disappears under this pH value so as not to produce the perceptible difference. The pH indicator is then exhibiting a color in fresh mortar but is at least substantially colorless for the human eye when the mortar is solidified. The pH indicator is for example phenolphthalein, nitramin, o-cresolphthalein, alpha-naphtholbenzein or thymolphthalein. Preferably, phenolphthalein is used for tinting fresh mortar as a perceptible difference is produced also when using a low concentration.

Alternatively, the marker is an organic dye which is unstable and fades or decomposes in time or due to external conditions, such as temperature, UV-light, daylight or oxidising agents such as oxygen. For example, a photocatalyst can be used to accelerate the degradation of the organic dye. Examples of such organic dyes are carotinoids and xanthophylls.

When a person spraying ordinary mortar 19 according to Fig. 1A decides to pause for a period of time or terminate the spraying process for the day, he connects the retarder source 17 according to Fig. 1B so that a mortar additive composition comprising the retarder and the marker for temporary tinting of the mortar is added to the mortar. The mortar containing the retarder is marked and the craftsman can easily detect when marked or tinted fresh mortar 18 is leaving the spraying nozzle 15. The marked fresh mortar 18 can be sprayed onto the surface, as the marking will fade. When the craftsman detects marked mortar 18 leaving the spraying nozzle 15 he knows that the equipment is full of retarded mortar and may terminate the spraying process. When the spraying process is resumed the configuration of Fig. 1A is used, i.e. without the addition of the marked retarder composition, wherein the marked mortar contained in the equipment can be sprayed onto the surface followed by ordinary unmarked mortar 19.

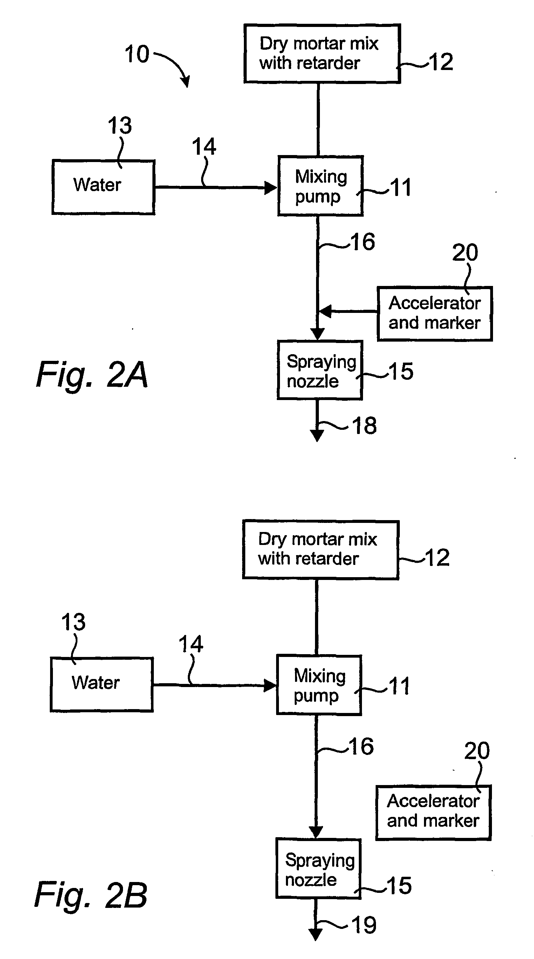

With reference to Fig. 2A and Fig. 2B a device 10 for mixing and spraying mortar is illustrated. Similar to the embodiment of Fig. 1A and Fig. 1B the device 10 according to Fig. 2A and 2B comprises the mixing pump 11 connected to the dry mortar mix source 12, the water source 13, and the spraying nozzle 15 through the hose 16. According to the embodiment of Fig. 2A and 2B the dry mortar contains retarder in powder form, so that the fresh mortar produced after mixing with water is retarded always. Fig. 2A illustrates a normal or standard configuration, wherein an accelerator source 20 is connected to the spraying nozzle 15 or the hose 16 for supplying an accelerator for accelerating the solidification of the retarded mortar. The accelerator is preferably added to the spraying nozzle 15 or a portion of the hose 16 close to the spraying nozzle 15, wherein the major portion of the equipment always is filled with retarded mortar.

According to this embodiment of the invention, the marker is added for marking the mortar containing the accelerator. For example the accelerator is mixed with the marker to form the mortar additive composition, which is then mixed into the mortar containing the retarder. As the mortar containing the accelerator is marked, the person or craftsman handling the device 10 and spraying the mortar knows when the mortar contains the accelerator or not. Consequently, he can determine when all of the equipment, including the entire spraying nozzle 15, is full of mortar containing the retarder as unmarked mortar 19 is sprayed instead of marked mortar 18. When the craftsman decides to pause the spraying process for a period of time, he switches off the addition of the accelerator and marker composition and continues to spray until only unmarked and retarded mortar 19 leaves the spraying nozzle 15.

### EXPERIMENT 1

A retarding and temporary tinting solution was prepared by dissolving 3 g retarder (e.g. Sodium Gluconate or Delvocrete^{™}) and 0,2 g pH indicator (e.g. phenolphthalein) in 1 litre water at pH > 10. This solution was used as mixing water for mixing a cementitious mortar comprising organic additives, such as cellulose ether, sodium oleat, magnesium stearat, OSB and dispersion powder. One example of such mortar is the commercial mortar Maxit multi 290E™. The color of the fresh mortar immediately turned intensive red.

One part of this red fresh mortar was put into a tight box and one part was applied onto a substrate, such as eternite board. Next morning, the mortar in the box was still soft, whereas the mortar on the substrate had dried out and the red color was gone. The mortar had at least substantially regained its original color and consequently was subject to temporary tinting only.

### EXPERIMENT 2

Experiment 2 is an examination of the temporary tinting effect, i.e. the change of color, produced by phenolphthalein in mortar. The examination of the change of color was determined with a Minolta Photometer (Colorimeter "Minolta CM-525") using the L,a,b values. As an aqueous phenolphthalein solution was used, the a-value indicating red color was examined.

A simple dry mortar mix containing nothing else but 20 % white cement (White Cement CEM 42,5 company Dyckerhoff) and 80 % limestone sand (Sand "Saxogran 0 - 0,5", company Geomin) was tested by mixing it with an aqueous retarding and temporary tinting solution containing 0,02 % phenolphthalein (company Fluka), 0,7 % potassium diphosphate (company Riedel-de Haen) and 0,025 % NH₃ (company Riedel-de Haen). Hence, the dry mortar mix was mixed with water and a mortar additive composition comprising the retarder and the marker. The resulting test mortar was applied on fibre cement boards from the company Etemit in a layer thickness of 5 mm. The color change was determined, while the samples were left under ordinary lab conditions (CO₂ concentration: 0,037 %, detected with a CO₂ detector "testo 535").

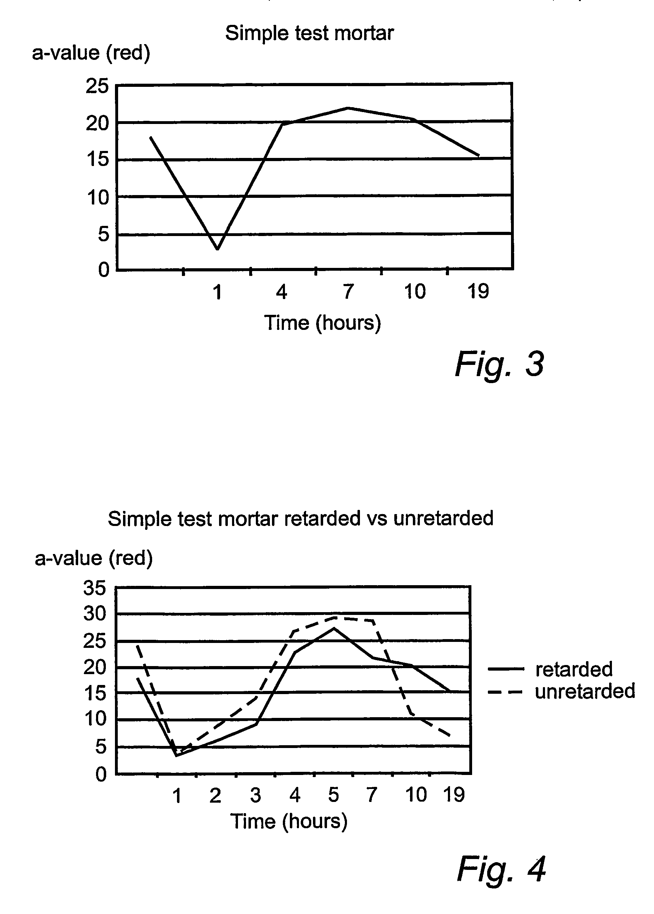

As can be seen in the graph of Fig. 3, showing the a-value over time for this simple test mortar, pH goes down during the first hour and the phenolphthalein is decolourising. This is due to the fact that the small amounts of NaOH and KOH are recarbonating fast. But after that, the cement hydration starts, resulting in production of large quantities of Ca(OH)₂, which leads to an increase of the pH and thus re-colouring of the phenolphthalein in the mortar. Ca(OH)₂ then reacts with CO₂ from air and form CaCO₃ and H₂O. CaCO₃ is inert and not water soluble, wherein the phenolphthalein resides in an environment having a lowered pH and thus decolorises again. This subsequent recarbonation and bleaching starts again after approximately 10 hours and it will take quite a long time for the color to fade.

The simple dry mortar mix containing nothing else but 20 % white cement and 80 % limestone sand was mixed with phenolphthalein solutions containing retarder and not containing retarder, wherein the a-values over time were compared. As can be seen in the graph of Fig. 4, the retarder has nearly no impact on the temporary tinting behaviour of the test mortars, which are applied on a fibre cement board. This is in accordance to the observation that the retarded mortar hardens normally when applied on the board, but stays soft in a closed box for more than 24 hours.

Then different organic mixtures were added to the simple test mortar above to examine the impact of organic admixtures on the temporary tinting. The organic mixtures added were
"MC" = cellulose ether Methocel 267 (0,2 %), company DOW Chemicals
"Na-Oleat" = sodium oleat (0,3 %), company Greven
"MgStearat" = magnesium stearat (0,3 %), company Greven
"OSB" = Hostapur OSB (0,03 %), company ShinEtsu
"Disp." = polymer dispersion powder "Vinapas RE 544Z" (2 %), company Wacker
"all incl." = test mortar containing 0,2% MC + 0,3 % Na-Oleat, 0,3 % MgStearat + 0,03 % OSB + 2 % Disp.

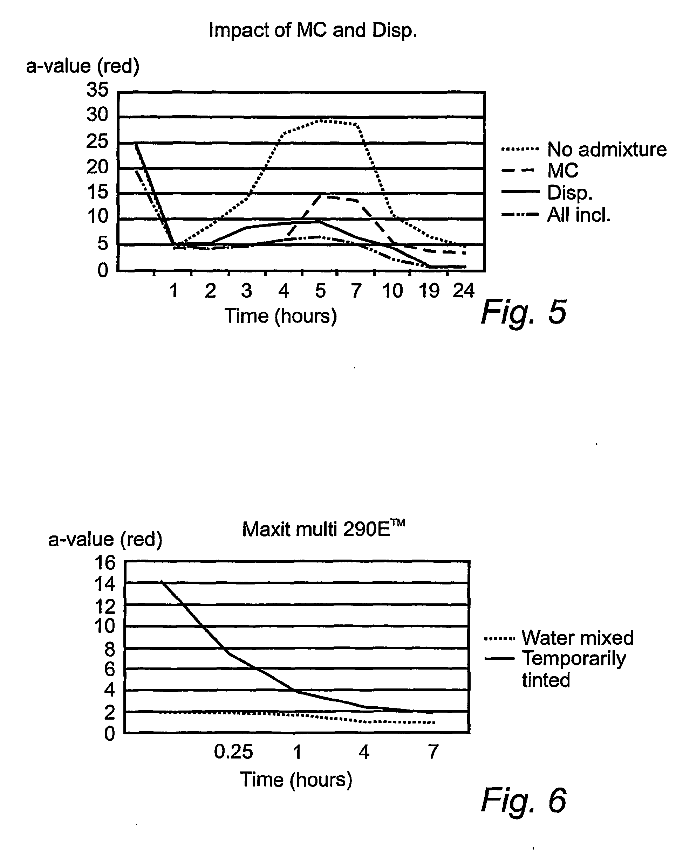

As the retarder did not seem to have a significant impact on the temporary tinting, the mortars were mixed with the phenolphthalein solution without retarder. The results showed that the hydrophobing agents Na-Oleat and Mg- Stearat have nearly no impact on the temporary tinting behaviour. The air entrainer Hostapur OSB seems to accelerate the re-colourisation to a certain extent. But the strongest impact is coming from dispersion powder and from the cellulose ether, which both inhibit the re-colourisation of the mortar significantly. For a better visualisation, only the most important curves are shown in the diagram of Fig. 5, i.e. the graphs for the simple test mortar without any additives, the test mortar including cellulose ether only, the test mortar including dispersion powder only, and the test mortar including 0,2% MC + 0,3 % Na-Oleat, 0,3 % MgStearat + 0,03 % OSB + 2 % Disp. as stated above.

As soon as the a-value is going below 5, the human eye perceives the colour of the mortar as only slightly pale pink. The time until the a-values permanently have gone down below 5 is shown in the table below for the different test mortars.

| Mortar | Time until a-value < 5 permanently |
|---|---|
| Test mortar, no admixture | 24 h |
| Test mortar + MC | 11 h |
| Test mortar + Disp. | 9 h |
| Test mortar all inclusive | 7 h |

A simple cementitious test mortar, consisting only of white cement and sand, and which is tinted temporarily with phenolphthalein, needs more than 24 hours to regain its original colour. In contrast to that, we surprisingly found that a cementitious mortar also containing cellulose ether and/or dispersion powder regain its original color significantly faster. Even more surprisingly, the test mortar containing all the organic additives stated above, i.e. 0,2% cellulose ether, 0,3 % sodium oleat, 0,3 % magnesium stearat, 0,03 % OSB and 2 % dispersion powder, regained its color even faster, i.e. within approximately 7 hours. This is surprising as there is a lot of Ca(OH)₂ produced during cement hydration and under normal conditions (CO₂ content in the air is approx. 0,04 %), the carbonation should take longer time.

Then the commercial mortar Maxit multi 290E™ was tested by mixing it with ordinary water or by mixing it with a retarding and temporary tinting solution containing 0,02 % phenolphthalein, 0,7 % potassium diphosphate and 0,025 % NH₃. The tinted fresh mortar was intensive purple, but already after approx. 7 hours, the mortar has regained its ordinary color (already after 5 hours, the human eye detects nearly no difference between the mortar mixed with water and the temporarily tinted mortar). The L,a,b values for the mortar mixed with water only (Water mixed) and the mortar comprising the marked retarder solution (Temporarily tinted) was examined.

L,a,b values of fresh mortars:

| | |
|---|---|
| Water mixed: | 77,13 /01,96/12,18 |
| Temporarily tinted: | 70,19 / 14,37 / 00,97 |

L,a,b values after 7 hours:

| | |
|---|---|
| Water mixed: | 85,21 / 0,98 / 7,53 |
| Temporarily tinted: | 83,96 /1,81 / 7,93 |

In the diagram of Fig. 6 the change of the a-values (red) over time is shown.

## Claims

1. A method for processing mortar, comprising the steps of mixing a dry mortar mix with water, a substance influencing the solidification rate of the mortar and a marker for producing a perceptible difference between marked and unmarked fresh mortar, and thereby marking the fresh mortar containing said substance, ***characterised* by** the steps of maintaining the perceptible difference temporarily, bringing the perceptible difference to fade, and at least substantially removing the perceptible difference between marked and unmarked mortar.

2. A method according to claim 1, comprising the step of tinting the fresh mortar containing the substance influencing the solidification rate thereof to produce the perceptible difference between marked and unmarked fresh mortar.

3. A method according to claim 2, comprising the step of adding a pH indicator to the mortar to indicate the presence of the substance influencing the solidification rate of the mortar, and thereby tinting the fresh mortar during a period when it has a relatively high pH value and then bring the tinted mortar to fade as the pH value is reduced.

4. A method according to claim 3, comprising the step of adding a pH indicator in the form of phenolphthalein.

5. A method according to claim 2, comprising the step of adding an unstable organic dye to the mortar for marking the mortar containing the substance influencing the solidification rate of the mortar.

6. Use of a substance, which provides a temporary marking of mortar, in combination with mortar and a substance influencing the solidification rate of the mortar, for marking the mortar containing the substance influencing the solidification rate of the mortar.

7. Use according to claim 6, wherein the substance which provides a temporary marking of the mortar is a pH indicator tinting the fresh mortar.

8. Use according to claim 7, wherein the pH indicator is phenolphthalein.

9. A mortar additive composition for influencing the solidification rate of mortar, comprising a substance influencing the solidification rate of the mortar and a marker for producing a perceptible difference between marked and unmarked fresh mortar to mark the fresh mortar containing the substance influencing the solidification rate in the mortar, ***characterised* in that** the marker is a substance which maintains the perceptible difference temporarily and then fades to remove the perceptible difference between marked and unmarked mortar.

10. A mortar additive composition according to claim 9, wherein the marker is a substance for producing a visible difference between marked and unmarked fresh mortar, and which does not produce said visible perceptible difference after a period of time.

11. A mortar additive composition according to claim 10, wherein the marker is a substance for tinting the fresh mortar.

12. A mortar additive composition according to claim 11, wherein the marker is a pH indicator tinting the fresh mortar and fading during solidification to remove the perceptible difference when the mortar is solidified.

13. A mortar additive composition according to claim 12, wherein the marker is a pH indicator which is colored above pH 9.

14. A mortar additive composition according to claim 13, wherein the marker is phenolphthalein.

15. A mortar additive composition according to claim 11, wherein the marker is an unstable organic dye, which fades due to degradation to remove the perceptible difference.

16. A mortar additive composition according to any of claims 10-15, wherein the mortar additive composition is adapted for mortars based on mineral binders.

17. A mortar comprising the mortar additive composition according to any of claims 10-16.

## Patentansprüche

1. Verfahren zum Erzeugen von Mörtel, umfassend die Schritte ein Trockenmörtelgemisch mit Wasser, einer Substanz, die die Verfestigungsrate des Mörtels beeinflusst, und einem Marker, zur Erzeugung einer wahrnehmbaren Differenz zwischen markiertem und unmarkiertem frischen Mörtel, zu mischen, wodurch der frische Mörtel markiert wird, der die Substanz enthält, **gekennzeichnet durch** die Schritte die wahrnehmbare Differenz temporär aufrechtzuerhalten, die wahrnehmbare Differenz zum Abschwächen zu bringen und die wahrnehmbare Differenz zwischen markiertem und unmarkiertem Mörtel zumindest im Wesentlichen zu entfernen.

2. Verfahren nach Anspruch 1, umfassend den Schritt den frischen Mörtel, umfassend die Substanz, die die Verfestigungsrate davon beeinflusst, abzutönen, um die wahrnehmbare Differenz zwischen markiertem und unmarkiertem Mörtel herzustellen.

3. Verfahren nach Anspruch 2, umfassend den Schritt einen pH-Indikator zu dem Mörtel hinzuzufügen, um das Vorhandensein der Substanz, die die Verfestigungsrate des Mörtels beeinflusst, anzuzeigen und dabei den frischen Mörtel während einer Periode, wenn dieser einen relativ hohen pH-Wert aufweist, abzutönen und dann den abgetönten Mörtel zum Abschwächen zu bringen, wenn der pH-Wert reduziert ist.

4. Verfahren nach Anspruch 3, umfassend den Schritt einen pH-Indikator in der Form von Phenolphthalein hinzuzufügen.

5. Verfahren nach Anspruch 2, umfassend den Schritt einen instabilen organischen Farbstoff zu dem Mörtel zum Markieren des Mörtels, umfassend die Substanz, die die Verfestigungsrate des Mörtels beeinflusst, hinzuzufügen.

6. Verwendung einer Substanz, welche eine temporäre Markierung von Mörtel bereitstellt, in Verbindung mit Mörtel und einer Substanz, die die Verfestigungsrate des Mörtels beeinflusst, zum Markieren des Mörtels, umfassend die Substanz, die die Verfestigungsrate des Mörtels beeinflusst.

7. Verwendung nach Anspruch 6, wobei die Substanz, welche eine temporäre Markierung des Mörtels bereitstellt, ein pH-Indikator ist, der den frischen Mörtel abtönt.

8. Verwendung nach Anspruch 7, wobei der pH-Indikator Phenolphthalein ist.

9. Mörtelanlagerungsverbindung zum Beeinflussen der Verfestigungsrate von Mörtel, umfassend eine Substanz, die die Verfestigungsrate des Mörtels beeinflusst und einen Marker zum Erzeugen einer wahrnehmbaren Differenz zwischen markiertem und unmarkiertem frischen Mörtel, um den frischen Mörtel, umfassend die Substanz, die die Verfestigungsrate in dem Mörtel beeinflusst, zu markieren, **dadurch gekennzeichnet, dass** der Marker eine Substanz ist, welche die wahrnehmbare Differenz temporär beibehält und dann abschwächt, um die wahrnehmbare Differenz zwischen markiertem und unmarkiertem Mörtel zu entfernen.

10. Mörtelanlagerungsverbindung nach Anspruch 9, **dadurch gekennzeichnet, dass** der Marker eine Substanz zur Erzeugung einer sichtbaren Differenz zwischen markiertem und unmarkiertem frischen Mörtel ist und welche die sichtbare wahrnehmbare Differenz nach einer Zeitspanne nicht erzeugt.

11. Mörtelanlagerungsverbindung nach Anspruch 10, **dadurch gekennzeichnet, dass** der Marker eine Substanz zum Abtönen des frischen Mörtels ist.

12. Mörtelanlagerungsverbindung nach Anspruch 11, **dadurch gekennzeichnet, dass** der Marker ein pH-Indikator ist, der den frischen Mörtel abtönt und während Verfestigung abschwächt, um die wahrnehmbare Differenz zu entfernen, wenn der Mörtel verfestigt ist.

13. Mörtelanlagerungsverbindung nach Anspruch 12, **dadurch gekennzeichnet, dass** der Marker ein pH-Indikator ist, welcher über pH 9 farbig ist.

14. Mörtelanlagerungsverbindung nach Anspruch 13, **dadurch gekennzeichnet, dass** der Marker Phenolphthalein ist.

15. Mörtelanlagerungsverbindung nach Anspruch 11, **dadurch gekennzeichnet, dass** der Marker ein instabiler organischer Farbstoff ist, welcher aufgrund Degradierung abschwächt, um die wahrnehmbare Differenz zu beseitigen.

16. Mörtelanlagerungsverbindung nach einem der Ansprüche 10-15, **dadurch gekennzeichnet, dass** die Mörtelanlagerungsverbindung für Mörtel basierend auf Mineralbindern angepasst ist.

17. Mörtel, umfassend die Mörtelanlagerungsverbindung nach einem der Ansprüche 10-16.

## Revendications

1. Procédé de traitement d'un mortier, comprenant les étapes de mélange d'un mélange de mortier sec avec de l'eau, une substance influençant la vitesse de solidification du mortier et un marqueur destiné à produire une différence perceptible entre un mortier frais marqué et non marqué, et à marquer ainsi le mortier frais contenant ladite substance, **caractérisé par** les étapes consistant à maintenir temporairement la différence perceptible, à atténuer la différence perceptible, et à éliminer au moins essentiellement la différence perceptible entre le mortier marqué et non marqué.

2. Procédé selon la revendication 1, comprenant l'étape consistant à colorer le mortier frais contenant la substance qui influence sa vitesse de solidification pour produire la différence perceptible entre le mortier frais marqué et non marqué.

3. Procédé selon la revendication 2, comprenant l'étape consistant à ajouter un indicateur de pH au mortier pour indiquer la présence de la substance qui influence la vitesse de solidification du mortier, et à colorer ainsi le mortier frais pendant une période durant laquelle il présente une valeur de pH relativement élevée, puis à atténuer la couleur du mortier coloré lorsque la valeur de pH est réduite.

4. Procédé selon la revendication 3, comprenant l'étape consistant à ajouter un indicateur de pH sous la forme de phénolphtaléine.

5. Procédé selon la revendication 2, comprenant l'étape consistant à ajouter un colorant organique instable au mortier pour marquer le mortier contenant la substance qui influence la vitesse de solidification du mortier.

6. Utilisation d'une substance qui fournit un marquage temporaire d'un mortier, en combinaison avec un mortier et une substance qui influence la vitesse de solidification du mortier, pour marquer le mortier contenant la substance qui influence la vitesse de solidification du mortier.

7. Utilisation selon la revendication 6, dans laquelle la substance qui fournit un marquage temporaire du mortier est un indicateur de pH qui colore le mortier frais.

8. Utilisation selon la revendication 7, dans laquelle l'indicateur de pH est la phénolphtaléine.

9. Composition d'additif pour mortier destinée à influencer la vitesse de solidification d'un mortier, comprenant une substance qui influence la vitesse de solidification du mortier et un marqueur destiné à produire une différence perceptible entre un mortier frais marqué et non marqué afin de marquer le mortier frais contenant la substance qui influence la vitesse de solidification du mortier, **caractérisée en ce que** le marqueur est une substance qui maintient temporairement la différence perceptible, puis s'atténue pour éliminer la différence perceptible entre le mortier marqué et non marqué.

10. Composition d'additif pour mortier selon la revendication 9, dans laquelle le marqueur est une substance destinée à produire une différence visible entre un mortier frais marqué et non marqué, et qui ne produit pas ladite différence perceptible visible après une période de temps.

11. Composition d'additif pour mortier selon la revendication 10, dans laquelle le marqueur est une substance destinée à colorer le mortier frais.

12. Composition d'additif pour mortier selon la revendication 11, dans laquelle le marqueur est un indicateur de pH qui colore le mortier frais et s'atténue pendant la solidification pour éliminer la différence perceptible lorsque le mortier est solidifié.

13. Composition d'additif pour mortier selon la revendication 12, dans laquelle le marqueur est un indicateur de pH qui est coloré au-dessus de pH 9.

14. Composition d'additif pour mortier selon la revendication 13, dans laquelle le marqueur est la phénolphtaléine.

15. Composition d'additif pour mortier selon la revendication 11, dans laquelle le marqueur est un colorant organique instable, dont la couleur s'atténue en raison de la dégradation pour éliminer la différence perceptible.

16. Composition d'additif pour mortier selon l'une quelconque des revendications 10 à 15, dans laquelle la composition d'additif pour mortier est conçue pour les mortiers à base de liants minéraux.

17. Mortier comprenant la composition d'additif pour mortier selon l'une quelconque des revendications 10 à 16.
